Europäisches Patentamt

European Patent Office

Office européen des brevets

(19)

(11) Veröffentlichungsnummer : **0 447 756 B1**

# (12) EUROPÄISCHE PATENTSCHRIFT

(45) Veröffentlichungstag der Patentschrift :
**27.04.94 Patentblatt 94/17**

(51) Int. Cl.$^5$ : **B27K 3/50**

(21) Anmeldenummer : **91100791.2**

(22) Anmeldetag : **23.01.91**

(54) **Mittel oder Konzentrat zum Schutz von Schnittholz gegen holzverfärbende Pilze.**

(30) Priorität : **20.03.90 DE 4008837**

(43) Veröffentlichungstag der Anmeldung :
**25.09.91 Patentblatt 91/39**

(45) Bekanntmachung des Hinweises auf die
Patenterteilung :
**27.04.94 Patentblatt 94/17**

(84) Benannte Vertragsstaaten :
**AT BE CH DE DK ES FR GB GR IT LI LU NL SE**

(56) Entgegenhaltungen :
**EP-A- 0 050 738**
**EP-A- 0 085 162**
**FR-A- 2 001 299**
**FR-A- 2 202 649**

(73) Patentinhaber : **DESOWAG Materialschutz
GmbH
Postfach 32 02 20, Rossstrasse 76
D-40417 Düsseldorf (DE)**

(72) Erfinder : **Hellwig, Volker, Dr.
Thiergartenstrasse 15
W-4150 Krefeld 1 (DE)**
Erfinder : **Hiller, Johannes Christian, Dr.
Vinhoverweg 50
W-4044 Kaarst 2 (DE)**

(74) Vertreter : **Lauer, Dieter, Dr.
c/o Solvay Deutschland GmbH
Hans-Böckler-Allee 20
D-30173 Hannover (DE)**

EP 0 447 756 B1

**Beschreibung**

Die vorliegende Erfindung betrifft ein Mittel oder Konzentrat zum Schutz von Schnittholz gegen holzverfärbende Pilze.

Frisch gesägtes Schnittholz wird in feuchtem Zustand häufig von holzverfärbenden Pilzen (Bläuepilzen) und Schimmelpilzen befallen, wodurch eine Wertminderung des Holzes hervorgerufen wird. Daher ist es nötig, eine Schutzbehandlung durchzuführen.

Aus der DE-OS 30 40 499 ist es bereits bekannt, in Holzschutzmitteln Triazolymethylketale der darin angegebenen Formel, u.a. 1-(2-(2',4'-Dichlorphenyl)-4-propyl-1,3-dioxolan-2-yl-methyl)-1H-1,2,4-triazol (common name: Propiconazol) zum Schutz des Holzes vor Befall durch holzverfärbende Pilze einzusetzen. Eigene durchgeführte Versuche im Stammscheibentest ergaben indessen, daß eine ausreichende Wirksamkeit nicht gegeben war.

Die Verbindung Tris-(N-cyclohexyl-diazeniumdioxi)-aluminium weist gemäß den Angaben in der Literaturstelle "Holz als Roh- oder Werkstoff" 35 und (1977), S. 234 zwar eine bläuewidrige Wirksamkeit auf, die sich jedoch in der Praxis nicht als ausreichend erwies.

Es wurde nun überraschend gefunden, daß eine Mischung aus 1-(2-(2',4'-Dichlorphenyl)-4-propyl-1,3-dioxolan-2-yl-methyl)-1H-1,2,4-triazol (common name: Propiconazol) und Tris-(N-cyclohexyl-diazeniumdioxi)aluminium eine synergistische Erhöhung der Wirksamkeit gegen Bläuebefall zeigt.

Erfindungsgemäß wird daher ein Mittel oder Konzentrat zum Schutz von Schnittholz gegen holzverfärbende Pilze beansprucht, das aus einer Mischung von

A) 1-(2-(2',4'-Dichlorphenyl)-4-propyl-1,3-dioxolan-2-yl-methyl)-1H-1,2,4-triazol und

B) Tris-(N-cyclohexyl-diazeniumdioxi)-aluminium im Verhältnis von

8 : 1 bis 1 : 8, vorzugsweise

2 : 1 bis 1 : 2,

in einem unpolaren und/oder polaren organischchemischen Lösemittel oder Lösemittelgemisch, vorzugsweise in einem polaren organisch-chemischen Lösemittel oder Lösemittelgemisch oder des Gemisches aus unpolaren und polaren organisch-chemischen Lösemitteln oder in einem Gemisch aus Wasser und einem organisch-chemischen Lösemittel, vorzugsweise einem polaren organischchemischen Lösemittel oder Lösemittelgemisch, und mindestens einen nichtionogenen Emulgator und/oder Netzmittel gelöst, besteht. Besonders bevorzugt wird ein Verhältnis der beiden Wirkstoffe von 1 : 1, da hierdurch eine zusätzliche Wirkung gegen Schimmelbefall erzielt wird.

Als unpolare organisch-chemische Lösemittel oder Lösemittelgemische werden schwerflüchtige, ölige oder ölartige Lösungsmittel wie Mineralöle oder mineralölhaltige Lösungsmittelgemische, Testbenzin, Petroleum und/oder Alkylbenzol eingesetzt. Vorzugsweise werden die Aromatenfraktionen der Mineralöle eingesetzt.

Als polare organisch-chemische Lösemittel werden Hydroxy-, Ether- Ester- oder Ketogruppen enthaltende Lösemittel oder Lösemittelgemische, vorzugsweise Dipropylenglykolmonomethylether eingesetzt.

Als nichtionogene Emulgatoren oder Emulgatorgemische gelangen Alkylpolyglykolether oder Alkylarylpolyglykolether, vorzugsweise ethoxylierte Nonylphenole zum Einsatz.

Das erfindungsgemäße Konzentrat zum Schutz von Schnittholz gegen holzverfärbende Pilze enthält vorteilhaft

2 bis 20 Gew. %, vorzugsweise

8 bis 12 Gew. %,

des Gemisches aus

A) 1-(2-(2',4'-Dichlorphenyl)-4-propyl-1,3-dioxolan-2-yl-methyl)-1H-1,2,4-triazol und

B) Tris-(N-cyclohexyl-diazeniumdioxi)-aluminium

im Verhältnis

8 : 1 bis 1 : 8, vorzugsweise

2 : 1 bis 1 : 2,

sowie

mehr als 79 Gew. %, vorzugsweise

mehr als 87 Gew. %,

des unpolaren und/oder polaren organisch-chemischen Lösemittels oder Lösemittelgemisches, vorzugsweise des polaren organisch-chemischen Lösemittels oder Lösemittelgemisches oder des Gemisches aus unpolaren und polaren organisch-chemischen Lösemitteln oder des Gemisches aus Wasser und einem organisch-chemischen Lösemittel, vorzugsweise einem polaren organischchemischen Lösemittel oder Lösemittelgemisch, und mindestens einen nichtionogenen Emulgator und/oder Netzmittel.

Das erfindungsgemäße Mittel (anwendungsfertige Mittel) zum Schutz von Schnittholz gegen holzverfärbende Pilze enthält nach einer vorteilhaften Ausführungsform

1 bis 20 Gew. %, vorzugsweise

2 bis 5 Gew. %

eines Konzentrates, bestehend aus

2 bis 20 Gew. %, vorzugsweise

8 bis 12 Gew. %,

der Mischung aus

A) 1-(2-(2',4'-Dichlorphenyl)-4-propyl-1,3-dioxolan-2-yl-methyl)-1H-1,2,4-triazol und

B) Tris-(N-cyclohexyl-diazeniumdioxi)-aluminium

im Verhältnis

8 : 1 bis 1 : 8, vorzugsweise

2 : 1 bis 1 : 2,

sowie

mehr als 79 Gew. %, vorzugsweise

mehr als 87 Gew. %,

des unpolaren und/oder polaren organisch-chemischen Lösemittels oder Lösemittelgemisches, vorzugsweise des polaren organisch-chemischen Lösemittels oder Lösemittelgemisches oder des Gemisches aus unpolaren und polaren organisch-chemischen Lösemitteln oder des Gemisches aus Wasser und einem organisch-chemischen Lösemittel, vorzugsweise einem polaren organischchemischen Lösemittel oder Lösemittelgemisch, und mindestens einen nichtionogenen Emulgator und/oder Netzmittel und

mehr als 79 Gew. %, vorzugsweise

mehr als 94 Gew. %,

Wasser.

Das Schnittholz wird mit dem erfindungsgemäßen Mittel oder Konzentrat derart behandelt, daß auf der Holzoberfläche

2 bis 8 g/m$^2$, vorzugsweise

4 bis 6 g/m$^2$

des Mittels oder Konzentrats aufgebracht werden.

Beispiele

Stammscheibentest gegen Bläue:

a. Vergleichsbeispiele

| Konzentrat | anwendungsfertiges Mittel | g/m$^2$ | Bläue | Schimmel |
|---|---|---|---|---|
| 6 % A | 0,5 % | 1,1-1,2 | 3 | |
| 12 % polares | in $H_2O$ | | | |
| Lösemittel | 4,0 % | 8,7-9,4 | | 5 |
| 62 % Aromaten | | | | |
| 20 % Emulgator | in $H_2O$ | | | |
| 6 % B | 0,5 % | 0,9-1,1 | 5 | |
| 64 % Aromaten | in $H_2O$ | | | |
| 30 % Emulgator | 4,0 % | 8,2-8,8 | | 1 |
| | in $H_2O$ | | | |

b. Erfindungsgemäße Beispiele:

| | | | | |
|---|---|---|---|---|
| 4 % A und | 0,25 % | 0,6 | 1 | |
| 8 % B | 0,5 | 1,1 | 0 | |
| 40 % polares | 2,0 % | 4,2-4,7 | | 0 - 1 |
| Lösemittel | in H$_2$O | | | |
| 28 % Aromaten | | | | |
| 20 % Emulgator | | | | |

| Konzentrat | anwendungsfertiges Mittel | g/m$^2$ | Bläue | Schimmel |
|---|---|---|---|---|
| 6 % A | 0,25 % | 0,5-0,6 | 0 | |
| 6 % B | 0,5 % | 1,0 | 0 | |
| 24 % Aromaten | 2,0 % | 4,4-4,6 | | 0 - 1 |
| 44 % polares | | | | |
| Lösemittel | in H$_2$O | | | |
| 20 % Emulgator | | | | |

| | | | | |
|---|---|---|---|---|
| 8 % A und | 0,25 % | 0,5 | 0 - 1 | |
| 4 % B | 0,5 % | 0,9-1,2 | 0 | |
| 48 % polares | 2,0 % | 4,4-4,6 | | 1 |
| Lösemittel | | | | |
| 20 % Aromaten | in H$_2$O | | | |
| 20 % Emulgator | | | | |

A: Propiconazol

B: Tris-(N-cyclohexyl-diazeniumdioxi)-aluminium

polares Lösemittel: Dipropylenglykolmonomethylether

Emulgator: ethoxyliertes Nonylphenol

Hierbei bedeuten:
Befallsgrad
0 :     befallsfrei
1 :     max.10 % der Oberfläche befallen
2 :     max.30 % der Oberfläche befallen
3 :     max.50 % der Oberfläche befallen
4 :     max.80 % der Oberfläche befallen
5 :     total befallen

**Patentansprüche**

1. Mittel oder Konzentrat zum Schutz von Schnittholz gegen holzverfärbende Pilze, dadurch gekennzeichnet, daß es aus einer Mischung von
   A) 1-(2-(2',4'-Dichlorphenyl)-4-propyl-1,3-dioxolan-2-yl-methyl)-1H-1,2,4-triazol und
   B) Tris-(N-cyclohexyl-diazeniumdioxi)-aluminium
   im Verhältnis von
   8 : 1 bis 1 : 8, vorzugsweise
   2 : 1 bis 1 : 2,
   in einem unpolaren und/oder polaren organischchemischen Lösemittel oder Lösemittelgemisch, vorzugsweise in einem polaren organisch-chemischen Lösemittel oder Lösemittelgemisch oder in Mischungen aus unpolaren und polaren organisch-chemischen Lösemitteln oder in einem Gemisch aus Wasser und einem organisch-chemischen Lösemittel, vorzugsweise einem polaren organisch-chemischen Lösemittel oder Lösemittelgemisch, und mindestens einen nichtionogenen Emulgator und/oder Netzmittel gelöst besteht.

2. Konzentrat zum Schutz von Schnittholz gegen holzverfärbende Pilze nach Anspruch 1 dadurch gekennzeichnet, daß es
   2 bis 20 Gew. %, vorzugsweise
   8 bis 12 Gew. %,
   des Gemisches aus
   A) 1-(2-(2',4'-Dichlorphenyl)-4-propyl-1,3-dioxolan-2-yl-methyl)-1H-1,2,4-triazol und
   B) Tris-(N-cyclohexyl-diazeniumdioxi)-aluminium
   im Verhältnis
   8 : 1 bis 1 : 8, vorzugsweise
   2 : 1 bis 1 : 2,
   sowie
   mehr als 79 Gew. %, vorzugsweise
   mehr als 87 Gew. %,
   des polaren und/oder unpolaren organisch-chemischen Lösemittels oder Lösemittelgemisches, vorzugsweise des polaren organisch-chemischen Lösemittels oder Lösemittelgemisches oder des Gemisches aus unpolaren und polaren organisch-chemischen Löstmitteln oder des Gemisches aus Wasser und einem organisch-chemischen Lösemittel, vorzugsweise einem polaren organisch-chemischen Lösemittel oder Lösemittelgemisch, und mindestens einen nichtionogenen Emulgator und/oder Netzmittel enthält.

3. Mittel zum Schutz von Schnittholz gegen holzverfärbende Pilze nach Anspruch 1, dadurch gekennzeichnet, daß das (anwendungsfertige) Mittel
   1 bis 20 Gew. %, vorzugsweise
   2 bis 5 Gew. %,
   eines Konzentrates, bestehend aus
   2 bis 20 Gew. %, vorzugsweise
   8 bis 12 Gew. %,
   der Mischung aus
   A) 1-(2-(2',4'-Dichlorphenyl)-4-propyl-1,3-dioxolan-2-yl-methyl)-1H-1,2,4-triazol und
   B) Tris-(N-cyclohexyl-diazeniumdioxi)-aluminium im Verhältnis von
   8 : 1 bis 1 : 8, vorzugsweise
   2 : 1 bis 1 : 2,
   sowie
   mehr als 79 Gew. %, vorzugsweise
   mehr als 87 Gew. %,
   des unpolaren und/oder polaren organisch-chemischen Lösemittels oder Lösemittelgemisches, vorzugsweise des polaren organisch-chemischen Lösemittels oder Lösemittelgemisches oder des Gemisches aus unpolaren und polaren organisch-chemischen Lösemitteln oder des Gemisches aus Wasser und einem organisch-chemischen Lösemittel, vorzugsweise einem polaren organisch-chemischen Lösemittel oder Lösemittelgemisch, und mindestens einen nichtionogenen Emulgator und/oder Netzmittel, und
   mehr als 79 Gew. %, vorzugsweise
   mehr als 94 Gew. %,
   Wasser, enthält.

4. Mittel oder Konzentrat nach einem oder mehreren der Ansprüche 1 bis 3, dadurch gekennzeichnet, daß als unpolare organisch-chemische Lösemittel schwerflüchtige ölige oder ölartige Lösemittel wie Mineralöle oder mineralölhaltige Lösemittelgemische, vorzugsweise deren Aromatenfraktionen eingesetzt werden.

5. Mittel oder Konzentrat nach einem oder mehreren der Ansprüche 1 bis 3, dadurch gekennzeichnet, daß als polares organisch-chemisches Lösemittel Hydroxy-, Ether, Ester- oder Ketogruppen enthaltende Lösemittel oder Lösemittelgemische, vorzugsweise Dipropylenglykolmonomethylether, eingesetzt werden.

6. Mittel oder Konzentrat nach einem oder mehreren der Ansprüche 1 bis 3, dadurch gekennzeichnet, daß als nichtionogene Emulgatoren Alkylpolyglykolether oder Alkylarylpolyglykolether, vorzugsweise ethoxylierte Nonylphenole eingesetzt werden.

7. Verfahren zum Schutz von Schnittholz gegen holzverfärbende Pilze, dadurch gekennzeichnet, daß auf die Holzoberfläche

2 bis 8 g/m$^2$ vorzugsweise

4 bis 6 g/m$^2$

des Mittels oder Konzentrats nach einem oder mehreren der Ansprüche 1,2,4 bis 6 aufgebracht werden.

## Claims

1. An agent or concentrate for protecting sawn timber against wood-discolouring fungi, characterised in that it consists of a mixture of

A) 1-(2-(2',4'-dichlorophenyl)-4-propyl-1,3-dioxolan-2-yl-methyl)-1H-1,2,4-triazole and

B) tris-(N-cyclohexyl-diazeniumdioxi)-aluminium

in a ratio of

8 : 1 to 1 : 8, preferably

2 : 1 to 1 : 2,

dissolved in a non-polar and/or polar organic-chemical solvent or solvent mixture, preferably in a polar organic-chemical solvent or solvent mixture or in mixtures of non-polar and polar organic-chemical solvents or in a mixture of water and an organic-chemical solvent, preferably a polar organic-chemical solvent or solvent mixture, and at least one non-ionogenic emulsifier and/or wetting agent.

2. A concentrate for protecting sawn timber against wood-discolouring fungi according to Claim 1, characterised in that it contains

2 to 20% by weight, preferably

8 to 12% by weight,

of the mixture of

A) 1-(2-(2',4'-dichlorophenyl)-4-propyl-1,3-dioxolan-2-yl-methyl)-1H-1,2,4-triazole and

B) tris-(N-cyclohexyl-diazeniumdioxi)-aluminium

in a ratio of

8 : 1 to 1 : 8, preferably

2 : 1 to 1 : 2,

and also

more than 79% by weight, preferably

more than 87% by weight,

of the polar and/or non-polar organic-chemical solvent or solvent mixture, preferably of the polar organic-chemical solvent or solvent mixture or of the mixture of non-polar and polar organic-chemical solvents or of the mixture of water and an organic-chemical solvent, preferably a polar organic-chemical solvent or solvent mixture, and at least one non-ionogenic emulsifier and/or wetting agent.

3. An agent for protecting sawn timber against wood-discolouring fungi according to Claim 1, characterised in that the agent (ready for use) contains

1 to 20% by weight, preferably

2 to 5% by weight,

of a concentrate, consisting of

2 to 20% by weight, preferably

8 to 12% by weight,

of the mixture of

A) 1-(2-(2',4'-dichlorophenyl)-4-propyl-1,3-dioxolan-2-yl-methyl)-1H-1,2,4-triazole and

B) tris-(N-cyclohexyl-diazeniumdioxi)-aluminium

in a ratio of

8 : 1 to 1 : 8, preferably

2 : 1 to 1 : 2,

and also

more than 79% by weight, preferably

more than 87% by weight,

of the non-polar and/or polar organic-chemical solvent or solvent mixture, preferably of the polar organic-chemical solvent or solvent mixture or of the mixture of non-polar and polar organic-chemical solvents or of the mixture of water and an organic-chemical solvent, preferably a polar organic-chemical solvent or solvent mixture, and at least one non-ionogenic emulsifier and/or wetting agent, and

more than 79% by weight, preferably

more than 94% by weight,

water.

4. An agent or concentrate according to one or more of Claims 1 to 3, characterised in that poorly volatile oily or oil-like solvents such as mineral oils or mineral oil-containing solvent mixtures, preferably aromatic fractions thereof, are used as non-polar organic-chemical solvents.

5. An agent or concentrate according to one or more of Claims 1 to 3, characterised in that solvents or solvent mixtures containing hydroxy, ether, ester or keto groups, preferably dipropylene glycol monomethyl ether, are used as the polar organic-chemical solvent.

6. An agent or concentrate according to one or more of Claims 1 to 3, characterised in that alkyl polyglycol ethers or alkyl aryl polyglycol ethers, preferably ethoxylated nonyl phenols, are used as non-ionogenic emulsifiers.

7. A method for protecting sawn timber against wood-discolouring fungi, characterised in that

2 to 8 g/m$^2$, preferably

4 to 6 g/m$^2$,

of the agent or concentrate according to one or more of Claims 1, 2, 4 to 6 are applied to the surface of the wood.


## Revendications

1. Agent, produit ou concentré pour protéger du sciage contre des fongus qui le souillent et en altère la couleur, produit ou concentré caractérisé en ce qu'il consiste en un mélange de :

A) 1-(2-(2',4'-dichlorophényl)-4-propyl-1,3-dioxolanne-2-yl-méthyl)-1H-1,2,4-triazole et de

B) Tris-(N-cyclohexyl-diazéniumdioxy)-aluminium,

selon un rapport de

8 : 1 à 1 : 8, avantageusement

2 : 1 à 1 : 2,

dissous dans un solvant ou mélange de solvants organiques chimiques, non polaires et/ou polaires, avantageusement dans un solvant ou un mélange de solvants organiques chimiques polaires ou dans des mélanges de solvants organiques chimiques non polaires et polaires ou dans un mélange d'eau et d'un solvant organique chimique, avantageusement un solvant ou un mélange de solvants organiques chimiques polaires, et au moins un émulsifiant non ionogène et/ou un agent de mouillage.

2. Concentré pour protéger du bois de sciage contre des fongus qui le souillent et en altèrent la couleur, selon la revendication 1, concentré caractérisé en ce qu'il contient :

2 à 20 % en poids, avantageusement

8 à 12 % en poids,

du mélange de :

A) 1-(2-(2',4'-dichlorophényl)-4-propyl-1,3-dioxolanne-2-yl-méthyl)-1H-1,2,4-triazole et de

B) Tris-(N-cyclohexyl-diazéniumdioxy)-aluminium,

selon un rapport de :

 8 : 1 à 1 : 8, avantageusement

 2 : 1 à 1 : 2 ,

ainsi que :

 plus de 79 % en poids, avantageusement

 plus de 87 % en poids ,

du solvant ou du mélange de solvants organiques chimiques polaires et/ou non polaires, avantageusement du solvant ou du mélange de solvants organiques chimiques polaires ou du mélange de solvants organiques non polaires et polaires et ou du nélange d'eau et d'un solvant organique chimique, avantageusement un solvant ou un mélange de solvants organiques chimiques polaires, et au moins un émulsifiant non ionogène et/ou un agent de mouillage.

3.  Produit pour protéger le bois de sciage contre des fongus qui le souillent et en altèrent la couleur, selon la revendication 1, produit caractérisé en ce que le produit (prêt à l'emploi) contient

 1 à 20 % en poids, avantageusement

 2 à 5 % en poids,

d'un concentré consistant en

 2 à 20 % en poids, avantageusement

 8 à 12 % en poids,

du mélange de

 A) 1-(2-(2',4'-dichlorophényl)-4-propyl-1,3-dioxolanne-2-yl-méthyl)-1H-1,2,4-triazole et de

 B) tris-(N-cyclohexyl-diazéniumdioxy)-aluminium selon un rapport de

  8 : 1 à 1 : 8, avantageusement

  2 : 1 à 1 : 2

ainsi que

 plus de 79 % en poids, avantageusement

 plus de 87 % en poids ,

du solvant ou du mélange de solvants organiques chimiques non polaires et/ou polaires, avantageusement du solvant ou du mélange de solvants organiques chimiques polaires, ou du mélange de solvants organiques chimiques, non polaires et polaires ou du mélange d'eau et d'un solvant organique chimique, avantageusement un solvant ou un mélange de solvants organique chimique polaire, et au moins un émulsifiant non ionogène et/ou un agent de mouillage, et

 plus de 79 % en poids, avantageusement

 plus de 94 % en poids d'eau,

4.  Produit ou concentré selon une ou plusieurs des revendications 1 à 3, caractérisé en ce qu'on utilise comme solvants organiques chimiques non polaires des solvants huileux ou analogues à de l'huile, peu volatils, comme des huiles minérales ou des mélanges de solvants contenant de l'huile minérale, avantageusement leurs fractions aromatiques.

5.  Produit ou concentré selon une ou plusieurs des revendications 1 à 3, caractérisé en ce qu'on utilise comme solvant organique chimique polaire des solvants ou des mélanges de solvants contenant des groupes hydroxyle, éther, ester ou cétone, avantageusement de l'éther monométhylique du dipropylène glycol.

6.  Produit ou concentré selon une ou plusieurs des revendications 1 à 3, caractérisé en ce qu'on utilise comme émulsifiants non ionogènes des éthers polyglycoliques d'alkyles ou des éthers polyglycoliques d'alkylaryles, avantageusement des nonylphénols éthoxylés.

7.  Procédé pour protéger du bois de sciage contre des fongus qui en altèrent la couleur, caractérisé en ce qu'on applique sur la surface du bois

 2 à 8 g/m$^2$, avantageusement

 4 à 6 g/m$^2$

du produit ou du concentré selon une ou plusieurs des revendications 1,2,4 à 6.